# FASCICULE DE BREVET EUROPEEN

(11) **EP 1 564 142 B1**
(45) Date de publication et mention de la délivrance du brevet: **05.11.2008**
(21) Numéro de dépôt: 05001658.3
(22) Date de dépôt: 27.01.2005
(51) Int. Cl.: B64D 15/12

(54) **Tapis chauffant composé de fibres électriquement conductrices**
Wärmematte aus elektrisch leitfähigen Fasern
Heating mat made of electrically conductive fibers

(30) Priorité: 11.02.2004 FR 0401322
(43) Date de publication de la demande: 17.08.2005
(73) Titulaire: EUROCOPTER, 13725 Marignane Cédex (FR)
(72) Inventeur: Brunner, Daniel, 95230 Soisy-Sous-Montmorency (FR); Amari, André, 95670 Marly La Ville (FR)
(74) Mandataire: Pouillot, Laurent Pierre Paul

(56) Documents cités:
- WO-A-95/15670
- WO-A-99/35888
- WO-A-03/007659
- FR-A- 935 233
- FR-A- 1 349 752
- FR-A- 2 578 377
- FR-A- 2 756 253
- US-A- 5 947 418

## Description

La présente invention concerne un tapis chauffant destiné au chauffage de surfaces aérodynamiques d'un aéronef. Plus particulièrement, les surfaces aérodynamiques concernées sont celles dont la forme aérodynamique ne doit pas être perturbée par la formation de glace tels que notamment les pales du rotor principal et du rotor arrière d'un giravion, ainsi que les ailes d'un avion.

D'une manière plus générale, cette invention peut encore être avantageusement utilisée pour le dégivrage et/ou l'antigivrage de structures dont la surcharge pondérale due au givre pourrait dégrader fortement les performances mécaniques ou les rendements telles que les pales d'éoliennes, les entrées d'air de moteurs, les rotors carénés de type fenestron® (parois de la veine d'alimentation en air, pales) voire même les fuselages d'aéronefs.

Le problème du givrage de surfaces aérodynamiques est bien connu dans l'industrie aéronautique. On entend par givrage la formation plus ou moins rapide d'un dépôt de glace sur certaines parties de l'aéronef (bords d'attaque de pales, d'hélices, d'ailes, d'empennages, et de dérives, pare-brise ou autres). Cette formation de glace résulte de ce qu'en vol, le profil rencontre des gouttelettes d'eau en surfusion dans l'atmosphère. Cet état de surfusion est un état d'équilibre très précaire qui peut être rompu si l'on apporte à la goutte d'eau une très faible quantité d'énergie, sous la forme d'un choc mécanique par exemple. L'eau change d'état et passe à l'état solide. Ainsi, une aile ou une pale qui traverse une zone de pluie surfondue apporte à toutes les gouttes d'eau assez d'énergie pour qu'elles passent à l'état solide. La surface aérodynamique se couvre alors de glace en très peu de temps. Ce dépôt de glace alourdit l'aéronef, parfois dans des proportions considérables, altère l'écoulement aérodynamique par modification de la forme de la surface aérodynamique et dégrade ainsi fortement ses performances.

Les coefficients Cx (coefficient de défaut résiduel, générateur de traînée) et Cz (coefficient d'aptitude du volume à transformer en portance les pressions exercées par l'écoulement de l'air) sont directement proportionnels à la forme de la surface aérodynamique et à son incidence. La finesse qui est le rapport portance sur traînée caractérise la capacité de sustentation de la surface aérodynamique. Un aéronef a une finesse d'autant plus grande qu'il est capable de générer une portance importante par rapport à sa traînée. La formation de verglas, de givre mou ou de gelée blanche engendre une surcharge pondérale, augmente le coefficient Cx de la surface aérodynamique et réduit son coefficient Cz. Les performances opérationnelles de l'aéronef sont alors directement affectées par ce phénomène de givrage.

Ce problème est souvent traité en équipant la surface aérodynamique d'un dispositif chauffant à effet Joule. D'une manière générale, on distingue les dégivreurs, dont les éléments résistifs dissipateurs de chaleur sont alimentés de façon intermittente pour éliminer la glace qui se forme régulièrement, et les antigivreurs dont les éléments résistifs sont continûment alimentés pour empêcher la formation de glace. Les antigivreurs sont activés de façon préventive avant d'entrer en condition givrante, tandis que les dégivreurs sont utilisés principalement de façon curative, lorsque que la glace est déjà formée.

On connaît, par le document FR 2.578.377, un dispositif chauffant à effet Joule composé de fibres de carbone, noyées dans une matrice organique, généralement de type époxy. Ces éléments résistifs composites en fibres de carbone conductrices forment des rubans qui s'étendent de préférence au voisinage du bord d'attaque de la surface aérodynamique et parallèlement à celui-ci. Afin d'obtenir une puissance thermique par effet joule évolutive le long du bord d'attaque, on superpose plusieurs couches résistives.

On connaît par le document US 5947418 (qui montre toutes les caractéristiques du préambule de la revendication 1) un tapis chauffant comportant plusieurs éléments résistifs dont les extrémités distales sont reliées électriquement les unes aux autres, un élément résistif pouvant être muni de plusieurs couches résistives

On connaît, par le document FR 2.756.253, un dispositif chauffant à effet Joule en matériaux composites pour des pales de giravion, composé d'une pluralité de rubans pourvus d'au moins une couche résistive de largeur constante et d'au moins une couche résistive de largeur continûment évolutive. Cette configuration permet d'optimiser l'évolution de la résistance électrique du dispositif, notamment le long du bord d'attaque, afin d'obtenir la puissance thermique surfacique requise par les thermiciens lors de la conception de la pale.

Toutefois, la découpe, la dépose et l'assemblage de ces couches résistive, constituées de fibres de carbone électriquement conductrices, imprégnées d'une matrice organique thermodurcissable, posent quelques problèmes de fabrication du fait de la complexité de mise en oeuvre. En effet, chaque couche résistive est formée d'un ensemble de rubans longitudinaux. Deux rubans longitudinaux voisins sont reliés par un ruban transversal agencé perpendiculairement à une des extrémités de ces deux rubans longitudinaux. De ce fait, la conduction électrique entre deux rubans longitudinaux voisins est assurée par un ruban transversal.

Cette architecture complexe nécessite de nombreuses découpes ce qui est économiquement pénalisant.

Par ailleurs, les orientations des rubans longitudinaux et transversaux devant être rigoureusement respectées, le temps de drapage manuel de l'ensemble se révèle important.

En outre, la qualité de la surface des rubans longitudinaux et transversaux d'une même couche résistive (surface de contact, orientation locale des fibres), qui est essentielle au bon fonctionnement de l'ensemble du réseau résistif, n'est pas toujours efficacement assurée. En effet, des séparateurs plastiques diélectriques peuvent être oubliés lors de la mise en oeuvre du dispositif, conduisant ainsi au rebut de la pièce. De la même manière, des rubans transversaux glissent quelquefois du moule de fabrication lors de la mise en forme du dispositif ou lors de sa polymérisation.

La présente invention a pour objet de proposer un tapis chauffant de surfaces aérodynamiques, tel que défini par la revendication indépendante 1..

Selon l'invention, un tapis chauffant, destiné à chauffer par effet Joule une surface aérodynamique d'un aéronef, est pourvu d'un élément résistif comportant au moins deux segments sensiblement parallèles de fibres électriquement conductrices, de type minéral, disposés sur ladite surface aérodynamique. L'invention est remarquable en ce que, lesdits segments sensiblement parallèles provenant d'une unique bande de fibres électriquement conductrices, deux segments sensiblement parallèles adjacents sont obtenus en pliant au moins deux fois une partie de l'unique bande.

De préférence, les fibres minérales électriquement conductrices sont constituées de fibres composites de carbone enrobées de résine de manière à former l'unique bande.

L'élément résistif du tapis chauffant est donc muni d'une unique bande de fibres électriquement conductrices ce qui permet d'assurer de façon certaine une continuité de liaison électrique au travers des différents segments sensiblement parallèles de l'unique bande.

De plus, cette configuration permet également de mieux contrôler l'orientation locale des fibres électriquement conductrices et d'éviter ainsi les difficultés de mise en oeuvre observées sur les dispositifs antérieurs à l'invention.

La mise en forme de l'élément résistif est en outre grandement simplifiée. En effet, selon l'invention, il suffit simplement de plier une unique bande pour obtenir l'élément résistif désiré. Le temps de fabrication du tapis chauffant est dans ces conditions très inférieur à celui nécessaire pour découper et assembler une pluralité de rubans transversaux et longitudinaux.

L'unique bande peut avoir une section constante ou une section variable le long du bord d'attaque. La variation de section est générée par une variation de la largeur de l'unique bande. De façon avantageuse, une première partie de l'unique bande en fibres électriquement conductrices a une largeur constante et une deuxième partie a une largeur évolutive. De préférence, l'évolution de la largeur de la bande se fera de manière continue.

Afin d'optimiser la résistance électrique du tapis chauffant, l'élément résistif comporte au moins deux couches résistives superposées. Chaque couche résistive est composée d'une unique bande de fibres électriquement conductrices, cette bande étant pliée selon la technique précédemment évoquée.

Selon l'invention, deux couches résistives, superposées et voisines, sont indépendantes électriquement par l'adjonction entre ces deux couches résistives d'un séparateur diélectrique qui sera avantageusement composé d'un pli de tissu de verre. Dans ces conditions, chacune de ces couches résistives sera alimentée électriquement indépendamment de l'autre.

L'invention trouve une application particulière dans le domaine des pales de giravions où les performances aérodynamiques sont essentielles à la stabilité du vol et où la masse des composants est déterminante. Les segments sensiblement parallèles de fibres électriquement conductrices sont alors disposés sur l'envergure de la surface aérodynamique et parallèlement à son bord d'attaque, la surface aérodynamique étant dans ce cas une pale. Le nombre de couches résistives à empiler et la largeur de l'unique bande constituant une même couche résistive sont déterminés en fonction des spécifications thermiques requises par les thermiciens et les aérodynamiciens, lors de la conception de la pale. Ces paramètres dépendent notamment de la vitesse de rotation du rotor, du nombre de pales, de la longueur et de la corde des pales.

D'autres particularités et avantages de la présente invention apparaîtront dans la description qui suit, avec des exemples de réalisation donnés à titre illustratif en référence aux figures annexées qui représentent :
- la figure 1, une coupe transversale d'une surface aérodynamique équipée d'un tapis chauffant selon l'invention.
- la figure 2, une vue schématique d'un élément résistif monocouche,
- la figure 3, une vue schématique d'un élément résistif multicouche,
- la figure 4, une coupe d'un élément résistif multicouche selon une première variante,
- la figure 5, une coupe d'un élément résistif multicouche selon une deuxième variante, et
- la figure 6, un tapis chauffant selon l'invention agencé sur une pale de giravion.

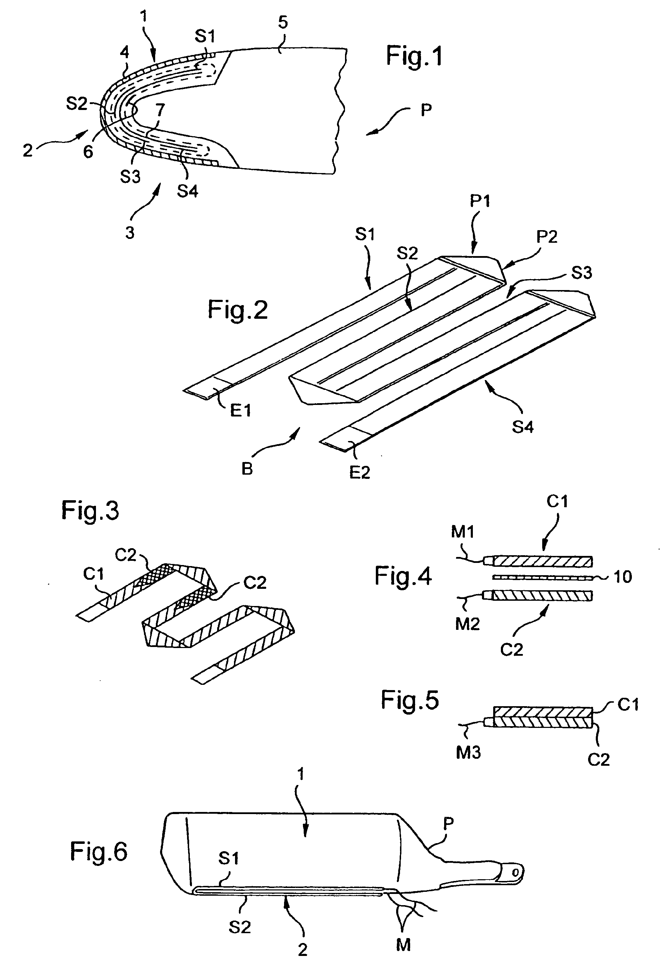

La figure 1 présente une coupe transversale d'une surface aérodynamique d'un aéronef, par exemple une pale P en matériaux composites de rotor arrière d'hélicoptère, équipée d'un tapis chauffant 6 selon l'invention.

La pale P est constituée de matériaux composites à base de fibres de carbone pour le revêtement et de fibres de verre pour le longeron, le voisinage de son bord d'attaque 2 étant couvert par un blindage 4 (par exemple métallique) de protection contre les impacts et l'érosion due à la pluie ou au sable. Le tapis chauffant 6 est agencé entre le noyau 5 de la pale P et le blindage 4. De plus, il est muni d'un substrat composite 7 sur lequel est collé un élément résistif en fibres électriquement conductrices comportant quatre segments sensiblement parallèles S1, S2, S3, S4. Le segment S1 de l'élément résistif se trouve au niveau de l'extrados 1 de la pale composite P, les segments S2, S3 au niveau du bord d'attaque 2 et le segment S4 au niveau de l'intrados 3.

La figure 2 présente un élément résistif selon un premier mode de réalisation. Cet élément résistif est dénommé « monocouche » dans la mesure où il ne comporte qu'une unique bande B de fibres électriquement conductrices, en carbone par exemple.

Cette unique bande B est composée de quatre segments sensiblement parallèles S1, S2, S3, S4. Les segments S1 et S2 adjacents proviennent d'une partie de l'unique bande B, cette partie ayant été pliée en deux zones P1, P2. De la même manière, un pliage double est réalisé entre les segments adjacents S2, S3 puis S3, S4. Selon la géométrie désirée, un nombre plus conséquent de pliages est réalisé entre deux segments adjacents.

Les extrémités E1, E2 de cette unique bande B permettent de la connecter à un moyen d'alimentation électrique de l'aéronef. En étant alimenté électriquement de façon continue au cours d'un vol par un moyen d'alimentation électrique de l'aéronef, l'élément résistif fonctionne dans un mode antigivrage. Il chauffera par effet joule la surface aérodynamique empêchant ainsi toute formation de givre sur cette surface. A contrario, en étant alimenté électriquement de façon intermittente, l'élément résistif fonctionne dans un mode dégivrage de manière à supprimer le givre présent sur la surface aérodynamique.

La figure 3 présente un élément résistif selon un deuxième mode de réalisation. Ce tapis chauffant est dénommé « multicouche » dans la mesure où il comporte deux couches résistives superposées C1, C2.

Les première C1 et seconde C2 couches résistives sont chacune composées d'une unique bande de fibres électriquement conductrices, chaque unique bande étant pliée selon le principe exposé précédemment. L'unique bande de la première couche résistive C1 a une largeur constante. Une partie de l'unique bande, constituant la seconde couche résistive C2, a une largeur constante alors que les deux autres parties ont une largeur continûment évolutive.

Selon une première variante du deuxième mode de réalisation, en référence à la figure 4, les première C1 et seconde C2 couches résistives sont superposées et voisines. De plus, elles sont séparées par une couche diélectrique 10. De façon avantageuse, cette couche diélectrique est composée d'un tissu de verre imprégné de la même matrice d'imprégnation thermodurcissable que celle imprégnant les fibres électriquement conductrices des première C1 et seconde C2 couches résistives. Dans ces conditions, chaque couche résistive C1, C2 est électriquement indépendante et par conséquent leurs extrémités sont respectivement connectées à leur propre moyen d'alimentation M1, M2.

Selon une deuxième variante du deuxième mode de réalisation, en référence à la figure 5, les première C1 et seconde C2 couches résistives, superposées et voisines, ne sont pas séparées par une couche diélectrique mais sont en contact électriquement l'une avec l'autre. Dans ce cas, un seul moyen d'alimentation électrique M3 est nécessaire, et le réseau résistif ainsi formé est piloté thermiquement de façon globale.

Selon une troisième variante du deuxième mode de réalisation, non référencée par une figure, le tapis chauffant « multicouche » comporte au moins deux couches résistives, superposées et voisines, séparées par une couche diélectrique. De plus, au moins deux couches résistives, superposées et voisines, sont en contact électriquement l'une avec l'autre.

Par ailleurs, le mode de réalisation, « monocouche » ou « multicouche », est défini en fonction des exigences de puissances thermiques surfaciques requises pour dégivrer où antigivrer la surface aérodynamique concernée. De la même manière, la largeur de l'unique bande constituant une couche résistive, quelle soit constante ou évolutive, est aussi déterminée en fonction de cette puissance thermique surfacique prescrite.

La figure 6 présente un tapis chauffant selon l'invention agencé dans une pale P, en matériaux composites, de giravion. Le segment S1 de ce tapis chauffant est disposé au niveau de l'extrados 1 de la pale P, le segment S2 au niveau du bord d'attaque 2 de cette pale P. Le tapis chauffant est électriquement alimenté par un moyen d'alimentation électrique M.

La mise en oeuvre de ce tapis chauffant sur la pale P peut être envisagée de différentes façons.

Une première solution consiste à manufacturer le tapis chauffant à plat en utilisant des matériaux composites préimprégnés non polymérisés. Pour ce faire, dans un premier temps, l'élément résistif est drapé puis plié, selon la méthode précédemment décrite, sur une table. Dans un deuxième temps, cet élément résistif est fixé au substrat composite du tapis chauffant en étant recouvert d'un ou plusieurs plis de renforts textiles.

Une fois cette opération terminée, ce tapis chauffant est mis en forme puis polymérisé dans un outillage autonome de type poinçon-matrice. L'ensemble blindage-tapis chauffant est alors soit collé au noyau d'une pale P polymérisée par ailleurs soit intégré sur la pale P au moment du moulage de cette dernière, le collage s'effectuant de ce fait lors de la polymérisation de la pale P.

Une deuxième solution permet de réduire le coût de fabrication du dispositif. En effet, après constitution du tapis chauffant à plat avec des matériaux composites, ce tapis chauffant est mis en forme sur le redan d'une pale moulée, c'est-à-dire sur la partie avant du noyau de cette pale, puis polymérisé dans le moule de la pale. Avec cette méthode, la pale moulée fait office de poinçon de moulage ce qui réduit les temps de fabrication et évite l'investissement d'un outillage spécifique de moulage du tapis chauffant.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Tapis chauffant (6) destiné au chauffage par effet joule d'une surface aérodynamique (P) d'un aéronef, pourvu d'un élément résistif comprenant au moins deux segments sensiblement parallèles (S1,S2,S3,S4) de fibres électriquement conductrices disposés sur ladite surface aérodynamique,
ledit élément résistif comportant au moins deux couches résistives (C1, C2) superposés, chaque couche résistive (C1, C2) étant composée d'une unique bande (B), **caractérisé en ce que** deux segments sensiblement parallèles adjacents (S1-S2,S2-S3,S3-S4) étant obtenus en pliant au moins deux fois une partie de chaque unique bande (B), au moins deux couches résistives (C1,C2) ,superposées et voisines, sont séparées par une couche diélectrique (10) et sont alimentées électriquement de façon indépendante.

2. Tapis chauffant selon la revendication 1,
**caractérisé en ce que** lesdites fibres électriquement conductrices sont du type minéral.

3. Tapis chauffant selon la revendication 2,
**caractérisé en ce que** lesdites fibres électriquement conductrices comporte du carbone.

4. Tapis chauffant selon l'une quelconque des revendications précédentes,
**caractérisé en ce qu'**au moins une partie d'une unique bande (B) a une largeur constante.

5. Tapis chauffant selon l'une quelconque des revendications précédentes,
**caractérisé en ce qu'**au moins une partie d'une unique bande (B) a une largeur évolutive.

6. Tapis chauffant selon l'une quelconque des revendications précédentes,
**caractérisé en ce qu'**au moins une partie d'une unique bande (B) a une largeur continûment évolutive.

7. Tapis chauffant selon l'une quelconque des revendications précédentes,
**caractérisé en ce que** ladite couche diélectrique (10) est constituée d'un tissu de verre imprégné d'une matrice thermodurcissable.

8. Tapis chauffant selon l'une quelconque des revendications précédentes,
**caractérisé en ce qu'**au moins deux couches résistives (C1,C2) ,superposées et voisines, sont électriquement en contact.

9. Tapis chauffant selon l'une quelconque des revendications précédentes,
**caractérisé en ce que** lesdits segments parallèles (S1,S2,S3,S4) de fibres électriquement conductrices sont disposés sur l'envergure de ladite surface aérodynamique (P) et parallèlement à son bord d'attaque (2).

## Claims

1. A heating mat (6) intended for heating an aerodynamic surface (P) of an aircraft by the Joule effect, which mat is provided with a resistive element comprising at least two substantially parallel segments (S1, S2, S3, S4) of electrically conductive fibres arranged on said aerodynamic surface,
said resistive element comprising at least two superposed resistive layers (C1, C2), each resistive layer (C1, C2) being composed of a single strip (B), **characterised in that** two adjacent, substantially parallel segments (S1-S2, S2-S3, S3-S4) being [sic] obtained by folding part of each single strip (B) at least twice, at least two superposed neighbouring resistive layers (C1, C2) are separated by a dielectric layer (10) and are independently supplied with electricity.

2. A heating mat according to Claim 1, **characterised in that** said electrically conductive fibres are of mineral type.

3. A heating mat according to Claim 2, **characterised in that** said electrically conductive fibres comprise carbon.

4. A heating mat according to any one of the preceding claims, **characterised in that** at least part of a single strip (B) has a constant width.

5. A heating mat according to any one of the preceding claims, **characterised in that** at least part of a single strip (B) has a progressive width.

6. A heating mat according to any one of the preceding claims, **characterised in that** at least part of a single strip (B) has a continuously progressive width.

7. A heating mat according to any one of the preceding claims, **characterised in that** said dielectric layer (10) is formed of a glass fabric impregnated with a thermosetting matrix.

8. A heating mat according to any one of the preceding claims, **characterised in that** at least two superposed neighbouring resistive layers (C1, C2) are electrically in contact.

9. A heating mat according to any one of the preceding claims, **characterised in that** said parallel segments (S1, S2, S3, S4) of electrically conductive fibres are arranged over the span of said aerodynamic surface (P) and parallel to the leading edge (2) thereof.

## Patentansprüche

1. Heizmatte (6), die zum Widerstandsheizen einer aerodynamischen Fläche (P) eines Luftfahrzeugs bestimmt ist, versehen mit einem Widerstandselement, das mindestens zwei im Wesentlichen parallele Segmente (S1, S2, S3, S4) von elektrisch leitenden Fasern aufweist, die auf der aerodynamischen Fläche angeordnet sind, wobei das Widerstandselement mindestens zwei übereinander angeordnete Widerstandsschichten (C1, C2) aufweist, wobei jede Widerstandsschicht (C1, C2) aus einem einzigen Band (B) besteht, **dadurch gekennzeichnet, dass**, da zwei im Wesentlichen parallele, benachbarte Segmente (S1-S2, S2-S3, S3-S4) durch mindestens zweifaches Falten eines Teils jedes einzigen Bands (B) erhalten werden, mindestens zwei übereinander angeordnete und benachbarte Widerstandsschichten (C1, C2) durch eine dielektrische Schicht (10) getrennt sind und unabhängig voneinander mit Strom versorgt werden.

2. Heizmatte nach Anspruch 1, **dadurch gekennzeichnet, dass** die elektrisch leitenden Fasern vom mineralischen Typ sind.

3. Heizmatte nach Anspruch 2, **dadurch gekennzeichnet, dass** die elektrisch leitenden Fasern Kohlenstoff enthalten.

4. Heizmatte nach einem der vorhergehenden Ansprüche, **dadurch gekennzeichnet, dass** mindestens ein Teil eines einzigen Bands (B) eine konstante Breite hat.

5. Heizmatte nach einem der vorhergehenden Ansprüche, **dadurch gekennzeichnet, dass** mindestens ein Teil eines einzigen Bands (B) eine erweiterbare Breite hat.

6. Heizmatte nach einem der vorhergehenden Ansprüche, **dadurch gekennzeichnet, dass** mindestens ein Teil eines einzigen Bands (B) eine kontinuierlich erweiterbare Breite hat.

7. Heizmatte nach einem der vorhergehenden Ansprüche, **dadurch gekennzeichnet, dass** die dielektrische Schicht (10) aus einem mit einer wärmehärtbaren Matrix getränkten Glasgewebe besteht.

8. Heizmatte nach einem der vorhergehenden Ansprüche, **dadurch gekennzeichnet, dass** mindestens zwei übereinander angeordnete und benachbarte Widerstandsschichten (C1, C2) elektrisch in Kontakt stehen.

9. Heizmatte nach einem der vorhergehenden Ansprüche, **dadurch gekennzeichnet, dass** die parallelen Segmente (S1, S2, S3, S4) von elektrisch leitenden Fasern auf der Spannweite der aerodynamischen Fläche (P) und parallel zu ihrer Vorderkante (2) angeordnet sind.
